# EUROPÄISCHE PATENTANMELDUNG

(11) **EP 1 429 051 A2**
(43) Veröffentlichungstag der Anmeldung: **16.06.2004**
(21) Anmeldenummer: 04006674.8
(22) Anmeldetag: 14.05.1997
(51) Int. Cl.: F16H 15/42

(54) **Kegelreibringgetriebe**

(62) Teilanmeldung aus: 97107857.1
(71) Anmelder: Rohs, Ulrich, Dr.-Ing., D-52351 Düren (DE)
(72) Erfinder: Rohs, Ulrich, Dr.-Ing., D-52351 Düren (DE)
(74) Vertreter: Patentanwaltskanzlei Liermann-Castell

(57) **Zusammenfassung**

Um ein Kegelreibringgetriebe (19) mit zwei entgegengesetzt zu einander auf zwei parallelen Wellen angeordneten und umlaufenden Kegelreibräder (3,4) mit gleichem Kegelwinkel und einem mit beiden Kegelreibräder (3,4) in Eingriff stehenden, das eine Kegelreibrad (3) umfassenden Reibring (5), der entlag der Erzeugenden beider Kegelreibräder (3,4) geführt ist, leistungsfähiger auszugestalten, hat dieses ein Kühlmedium, das einen hohen Reibwert zwischen den Kegelrädern (3,4) erzeugt.

## Beschreibung

Die Erfindung betrifft ein Kegelreibringgetriebe nach dem Oberbegriff des Patentanspruches 1.

Ein solches Kegelreibringgetriebe ist aus der GB-PS 298 676 bekannt. Bei dieser Ausführung ist parallel zu den Achsen der Kegelreibräder auf einer Führungsachse ein Führungsglied geführt, das den Reibring entlang den Kegelreibrädern zu führen vermag, wodurch eine stufenlose Verstellung des Übersetzungsverhältnisses des Kegelreibringgetriebes ermöglicht wird. Für die Verstellung des Reibringes ist ein besonderer Antrieb erforderlich, der das Getriebe aufwendig macht.

Der Erfindung liegt die Aufgabe zugrunde, ein derartiges Kegelreibringgetriebe leistungsfähiger auszugestalten. Die Lösung der Aufgabe besteht in den kennzeichnenden Merkmalen des Anspruches 1.

Weitere vorteilhafte Weiterbildungen der Erfindung sind in den Unteransprüchen angegeben.

Die erfindungsgemäß vorgeschlagene Bauart eignet sich insbesondere für den Einsatz als Fahrzeuggetriebe in Verbindung mit einer Flüssigkeitskupplung und einem Schaltgetriebe für den Fahrtrichtungswechsel sowohl für den Front- als auch für den Heckantrieb.

Nachstehend ist die Erfindung anhand von in der Zeichnung dargestellten Ausführungsbeispielen näher erläutert. Es zeigen:
- Figur 1: einen schematischen Querschnitt durch ein Kegelreibringgetriebe nach der Erfindung nach der Linie I-I in Figur 2;
- Figur 2: eine Draufsicht zu Figur 1;
- Figur 3: einen Längsschnitt durch einen Fahrzeugantrieb für einen Frontantrieb mit einem Kegelreibringgetriebe;
- Figur 4: eine andere Darstellung der Verstelleinrichtung nach einem Schnitt IV-IV in Figur 3;
- Figur 5: eine Einzelheit der Figur 4 im Längsschnitt und
- Figur 6: einen Längsschnitt durch einen Hinterradantrieb für ein Fahrzeug mit einem Kegelreibringgetriebe.

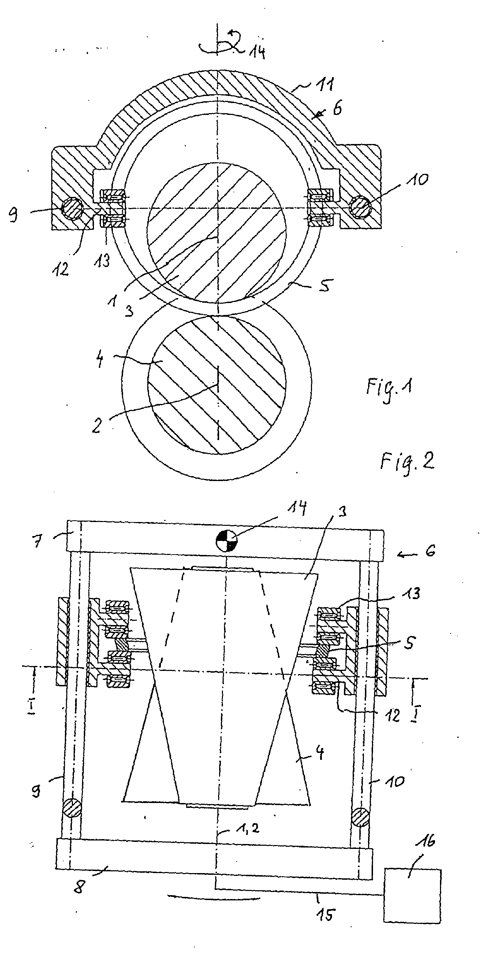

Die Figur 1 und 2 zeigen schematisch ein in Reibkegelgetriebe nach der Erfindung.

Es besteht im wesentlichen aus zwei auf parallelen Achsen 1,2 mit radialem Abstand angeordneten Kegelreibrädern 3,4, die zueinander gegensinnig angeordnet sind und gleiche Kegelwinkel β haben. Zwischen den Kegelreibrädem 3,4, ist ein, deren Zwischenraum ausfüllender Reibring 5 angeordnet, der das Kegelreibrad 3 umgibt und in einem Käfig 6 gehalten ist.

Der Käfig 6 besteht aus einem Rahmen, der von zwei Querhäuptern 7,8 und zwei darin aufgenommenen, parallelen Achsen 9,10 gebildet ist. Diese Achsen 9,10 sind parallel zu den Achsen 1,2 und zugleich zu den unter dem Winkel β geneigten Erzeugenden der Reibkegelräder 3,4 angeordnet und tragen eine Verstellbrücke 11 mit zwei aufeinander weisenden Zapfen 12, auf denen jeweils eine Führungsrolle 13 sitzt. Die Führungsrollen 13 greifen beiderseits des Reibringes 5 an und geben diesem die notwendige axiale Führung.

Die Mitte des Querhauptes 7 bildet eine lotrechte Drehachse 14, um die der gesamte Käfig 6 schwenkbar ist. Zu diesem Zweck ist das untere Querhaupt 8 mit einem daran angreifenden, nicht näher dargestellten Querantrieb 15 und einem Verstellmotor 16 verbunden.

Die Drehachse 14 liegt beim Ausführungsbeispiel in der durch die Drehachsen der Reibkegelräder 3,4 bestimmten Ebene. Sie kann auch in einer hierzu parallelen Ebene liegen oder die erstgenannte Ebene unter einem spitzen Winkel schneiden.

Wird der Käfig 6 um wenige Winkelgrade verschwenkt, so bewirkt der Reibantrieb eine axiale Verstellung der Verstellbrücke 11 und damit eine Änderung des Übersetzungsverhältnisses der Kegelreibräder. Hierzu genügt ein winziger Energieaufwand.

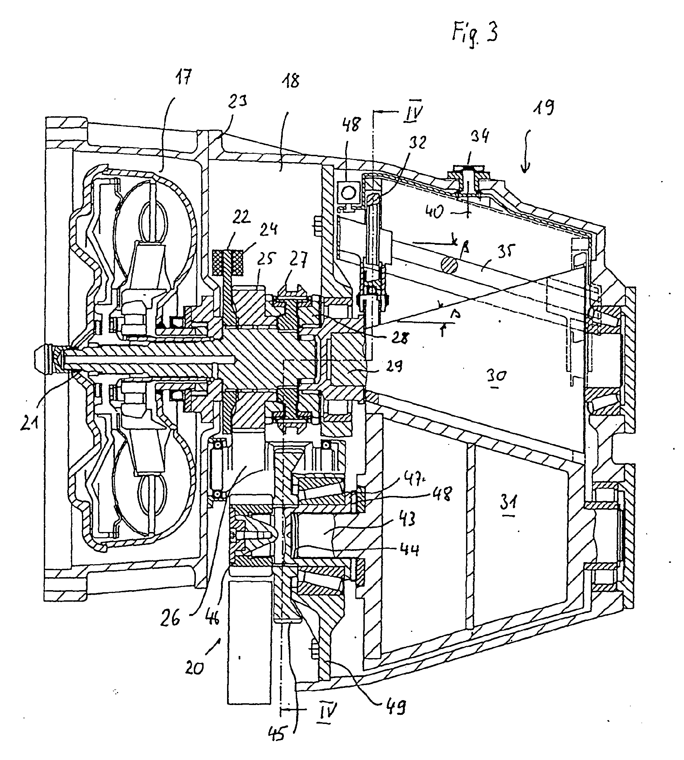

Fig.3 zeigt einen Frontantrieb für ein Fahrzeug mit einem erfmdungsgemäßen Kegelreibringgetriebe. Es besteht im wesentlichen aus einem hydraulischen Wandler bzw. einer Flüssigkeitskupplung 17, einem dieser nachgeordneten Schalteinheit 18, einem Kegelreibringgetriebe 19iund einem Abtrieb 20.

Der Abtriebsteil der Flüssigkeitskupplung 17 sitzt auf einer Welle 21, auf der auch eine Bremsscheibe 22 angeordnet ist, die mit im Gehäuse 23 gehaltenen Bremsbacken 24 zusammenwirkt und elektronisch ansteuerbar ist.

Unmittelbar hinter der Bremsscheibe 22 sitzt ein freilaufendes Zahnrad 25, das mit einem nur teilweise dargestellten Vorgelege 26 in Eingriff steht und im Abtrieb 20 den Rückwärtsgang bewirken kann. Das Zahnrad 25 weist auf einer Seite eine Kronenverzahnung auf, mit der es mit einer auf der Welle 21 gehaltenen und axial verschiebbaren, eine innere Axialverzahnung aufweisenden Schaltmuffe 27 in Eingriff gebracht und aktiviert werden kann.

Wird eine Drehrichtungsumkehr gewünscht, so wird zunächst die Bremse 22,24 betätigt, damit das nachfolgende Getriebe nicht von dem Drehmomentenstoß beeinträchtigt wird. Sodann wird die Schaltmuffe 27 in Fig.3 aus ihrer dort gezeigten neutralen Stellung nach rechts bewegt und gelangt mit einem Ritzel 28 in Eingriff, das fest mit der Antriebswelle 29 eines Kegelreibrades 30 des Kegelreibringgetriebes 19 verbunden ist.

Das Kegelreibringgetriebe 19 besteht, wie in den Fig. 1 und 2 beschrieben, aus zwei entgegengesetzt und mit radialem Abstand zueinander angeordneten Kegelreibrädern 30,31 mit gleichem Kegelwinkel β und parallelen Achsen. Ferner ist das obere Kegelreibrad 30 von einem Reibring 32 umschlossen, der mit seiner inneren Mantelfläche mit dem Kegelreibrad 30 und mit seiner äußeren Mantelfläche mit dem Kegelreibrad 31 in Reibeingriff steht.

Die beiden Kegelreibräder 30,31 können, wie dargestellt, unterschiedliche Durchmesser haben, wodurch ggf. eine Übersetzungsstufe beim nachfolgenden Abtrieb 20 eingespart wird.

Aus Gewichtsgründen können die Kegelreibräder 30,31 auch hohl ausgebildet sein, da es lediglich auf ihre Mantelflächen ankommt.

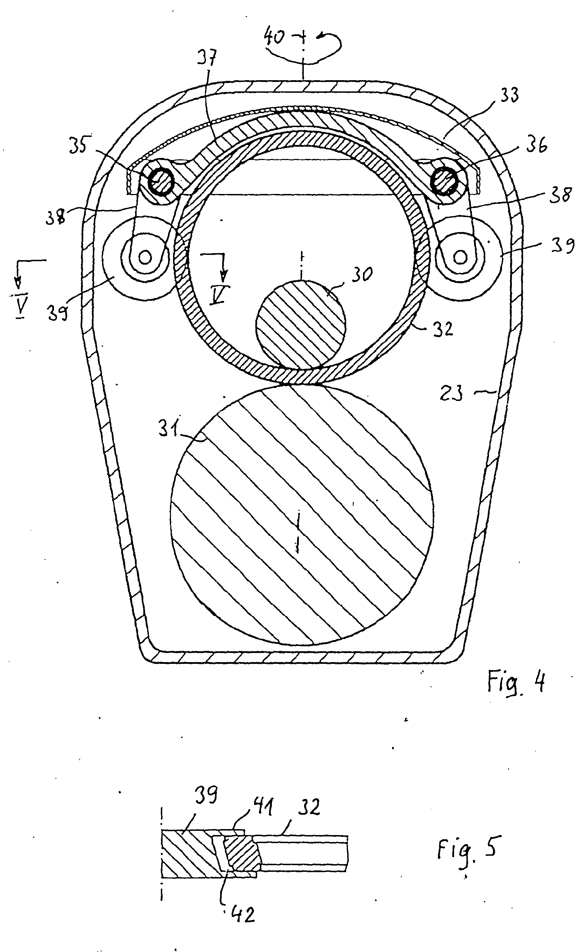

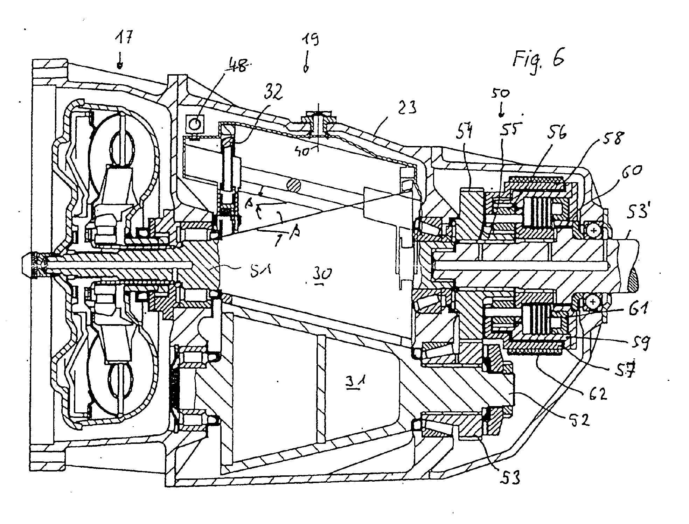

Der Reibring 32 ist, wie auch die Fig.4 und 5 zeigen, in einem Käfig 33 gehalten, der an der Stelle 34 (Fig.3) im Gehäuse um eine Drehachse 40 schwenkbar angeordnet, die in der durch die Drehachsen der Reibkegelräder 30,31 bestimmten Ebene liegt. Um große Schwenkwege zu venneiden, liegt sie etwa in der Mitte der axialen Länge der Reibkegelräder 30,31. Die Drehachse 40 kann, wie oben erwähnt, auch in einer hierzu parallelen Ebene liegen oder die erstgenannte Ebene unter einem spitzen Winkel schneiden.

Im Käfig sind zwei parallele Achsen 35,36 gehalten, deren Steigungswinkel β zur Waagerechten gleich dem Kegelwinkel β der Kegelreibräder 30,31 ist. Auf diesen Achsen 35,36 ist eine Verstellbrücke 37 geführt, die Ansätze 38 aufweist, an denen Führungsrollen 39 gelagert sind. Diese haben, wie Fig.5 zeigt, eine Umfangsnut 41 und umgreifen mit ihren Flanschen 42 den Reibring 32.

Der Reibring kann, wie dargestellt, mit seiner Achse parallel zu den Achsen der Reibkegelräder 30,31 angeordnet sein. Er kann aber auch so im Käfig gehalten sein, dass seine Achse parallel zur Erzeugenden der einander zugewandten Reibkegelräder 30,31 liegt und senkrecht auf der Mantelfläche der Reibkegelräder steht.

Für die Verstellung des Käfigs 33 ist eine im Gehäuse 23 gelagerte Verstellspindel 80 vorgesehen, die mit einem nicht dargestellten Verstellmotor oder Magnet verbunden ist und am Käfig 33 angreift.

Bei leichter Drehung des Käfigs 33 wird der Reibring 32 um die Achse 40 gedreht, wodurch sich die relative Lage zu den Kegelrädern verändert, so dass der Reibring 32 selbsttätig seine Position verfährt und das Übersetzungsverhältnis des Kegelreibringgetriebes 19 verändert.

Die Abtriebswelle 43 des Kegelreibrades 31 ist in einer Anpresseinrichtung 44 aufgenommen, die ihrerseits im Gehäuse 23 gelagert ist und trägt Abtriebsritzel 45,46.

Die Anpresseinrichtung 44 besteht aus einer die Abtriebswelle 43 übergreifenden Verlängerungswelle mit einem dem Kegelreibrad 31 zugewandten Flansch 47 mit einer Radialverzahnung 48, die mit einer entsprechenden Radialverzahnung am Kegelreibrad 31 zusammenwirkt. Die Radialverzahnung 48 bewirkt einen axialen Druck auf das Kegelreibrad 31.

Vorteilhaft ist das Gehäuse 23 zwischen dem An- und Abtrieb 17, 18, 20 einerseits und dem Kegelreibringgetriebe 19 andererseits durch eine Trennwand 49 abgeteilt. Damit ist es möglich, im Gehäuseteil für das Kegelreibringgetriebe 19 eine Kühlflüssigkeit ohne Schmiereigenschaften, z. B. Silikonöl, einlaufen zu lassen, so dass der Reibwert nicht beeinflusst wird. Als Kühlflüssigkeit für das Kegelreibringgetriebe eignen sich auch Traktionsfluide oder Öle mit Keramikpulver oder anderen Feststoffpartikeln.

Vorteilhaft bestehen die Reibflächen mindestens eines Getriebeteiles des Kegelreibringgetriebes, z.B. die Kegelreibräder 30,31 oder der Reibring 32 aus einer Beschichtung aus Hartmetall oder Keramik, z.B. Titannitrid, Titancarbonnitrid, Titan-Aluminiumnitrid oder dgl.

Die Fig.6 zeigt die Anwendung des erfindungsgemäßen Kegelreibringgetriebes bei einem Hinterradantrieb eines Fahrzeuges.

Vor einem Kegelreibringgetriebe 19 befmdet sich eine Flüssigkeitskupplung bzw. ein hydraulischer Wandler 17 und hinter dem Kegelreibringgetriebe 19 ein Planetengetriebe 50.

Die Abtriebswelle der Flüssigkeitskupplung 17 bildet zugleich die Welle 51 des oberen Kegelreibrades 30, das über den Reibring 32 ein unteres Kegelreibrad 31 antreibt, auf dessen Abtriebswelle 52 ein Ritzel 53 sitzt, das mit einem frei drehbaren, auf einer Getriebeabtriebswelle 53' sitzenden Zahnrad 54 kämmt. Die Getriebeabtriebswelle 53' fluchtet mit der Welle 51 und ist in dieser frei drehbar aufgenommen.

Ein mit dem Zahnrad 54 einstückig verbundenes Ritzel 55 bildet das Sonnenrad des Planetengetriebes 50. Dieses kämmt mit Planetenzahnrädern 56, die in einem Planetenträger 57 gehalten sind, der um die Getriebeabtriebswelle 53' zu laufen vermag. Der Planetenträger 57 weist einen zylindrischen Ansatz 58 auf, der ein Hohlrad 59 einschließt, das mit den Plantenzahnrädem 56 kämmt und mit der Getriebeabtriebswelle 53' über eine Längsverzahnung 60 fest verbunden ist.

Im Planetengetriebe 50 ist ferner eine Lamellenkupplung 61 vorgesehen, die die Getriebeabtriebswelle 53 mit dem Hohlrad 59 verbinden kann. Schließlich ist dem zylindrischen Ansatz 58 des Planetenträgers 54 eine Bremse 62 zugeordnet.

Durch Betätigung der Lamellenkupplung 61 wird der Vorwärtsantrieb eingeschaltet. Wird die Bremse 62 betätigt, wird der Planetenträger 57 festgehalten und es ergibt sich eine Drehrichtungsänderung der Getriebeabtriebswelle 53, d.h. ein Rückwärtsantrieb.

## Patentansprüche

1. Kegelreibringgetriebe mit zwei entgegengesetzt zu einander auf zwei parallelen Wellen angeordneten und umlaufenden Kegelreibräder mit gleichem Kegelwinkel und einem mit beiden Kegelreibräder in Eingriff stehenden, das eine Kegelreibrad umfassenden Reibring, der entlag der Erzeugenden beider Kegelreibräder geführt ist, ***gekennzeichnet durch*** ein Kühlmedium, das einen hohen Reibwert zwischen den Kegelrädern erzeugt.

2. Kegelreibringgetriebe nach Anspruch 1, ***dadurch gekennzeichnet, dass*** das Kühlmedium eine Kühlflüssigkeit mit Feststoffpartikeln ist.

3. Kegelreibringgetriebe nach Anspruch 1 oder 2, ***dadurch gekennzeichnet, dass*** Kühlmedium Luft ist und die Kegelreibräder vorzugsweise Keramische Oberflächen aufweisen.

4. Kegelreibringgetriebe nach Anspruch 1 oder 2, ***dadurch gekennzeichnet, dass*** das Kühhnedium ein Silikonöl ist.

5. Kegelreibringgetriebe nach einem der Ansprüche 1 bis 4, ***dadurch gekennzeichnet, dass*** ein Gehäuse (23) zwischen einem Antrieb (17, 18) und einem Abtrieb (20) einerseits und dem Kegelreibringgetriebe (19) andererseits durch eine Trennwand (49) abgeteilt ist.
